(19) Europäisches Patentamt
European Patent Office
Office européen des brevets

(11) **EP 4 182 196 B1**

(12) **EUROPÄISCHE PATENTSCHRIFT**

(45) Veröffentlichungstag und Bekanntmachung des Hinweises auf die Patenterteilung:
**26.02.2025   Patentblatt 2025/09**

(21) Anmeldenummer: **21737583.1**

(22) Anmeldetag: **23.06.2021**

(51) Internationale Patentklassifikation (IPC):
***B60T 13/74*** *(2006.01)*

(52) Gemeinsame Patentklassifikation (CPC):
**B60T 13/741**

(86) Internationale Anmeldenummer:
**PCT/EP2021/067114**

(87) Internationale Veröffentlichungsnummer:
**WO 2022/012886 (20.01.2022 Gazette 2022/03)**

(54) **VERFAHREN UND VORRICHTUNG ZUM ERMITTELN EINER SPANNKRAFT EINER BREMSEINRICHTUNG EINES KRAFTFAHRZEUGS**

METHOD AND DEVICE FOR DETERMINING A CLAMPING FORCE OF A BRAKING DEVICE OF A MOTOR VEHICLE

PROCÉDÉ ET DISPOSITIF DE DÉTERMINATION DE LA FORCE DE SERRAGE D'UN DISPOSITIF DE FREINAGE D'UN VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.07.2020   DE 102020208853**

(43) Veröffentlichungstag der Anmeldung:
**24.05.2023   Patentblatt 2023/21**

(73) Patentinhaber:
• **Robert Bosch GmbH
70442 Stuttgart (DE)**
• **Hitachi Astemo France
93700 Drancy (FR)**

(72) Erfinder:
• BRANDAUER, Jakob
70469 Stuttgart (DE)
• PENNER, Sascha
71717 Beilstein (DE)
• MARQUARDT, Oliver
70191 Stuttgart (DE)

(74) Vertreter: **Bee, Joachim
Robert Bosch GmbH
C/IPA
P.O. Box 30 02 20
70442 Stuttgart (DE)**

(56) Entgegenhaltungen:
EP-A1- 3 156 294        EP-B1- 3 156 294
KR-B1- 101 338 433      US-A1- 2017 321 773

**Beschreibung**

Die Erfindung betrifft ein Verfahren zum Ermitteln einer Spannkraft einer Bremseinrichtung eines Kraftfahrzeugs, wobei das Kraftfahrzeug wenigstens ein drehbar gelagertes Rad und eine Bremsanlage mit zumindest einer Bremseinrichtung und zumindest einem Elektromotor aufweist, wobei die Bremseinrichtung ein drehfest mit dem Rad verbundenes Bremselement und zumindest einen gegen das Bremselement pressbaren Bremskörper aufweist, wobei der Elektromotor eine Motorwicklung und einen drehbar gelagerten Rotor aufweist, wobei der Rotor durch eine Getriebeeinrichtung derart mit dem Bremskörper gekoppelt ist, dass durch eine Drehung des Rotors eine Spannkraft erzeugbar ist, durch die der Bremskörper gegen das Bremselement gepresst wird, wobei der Rotor durch eine Beaufschlagung der Motorwicklung mit einem elektrischen Motorstrom drehbar ist, wobei ein Drehwinkel des Rotors und/oder ein Verschiebeweg eines verschiebbar gelagerten Elementes der Getriebeeinrichtung ermittelt werden, und wobei eine Höhe der erzeugten Spannkraft in Abhängigkeit von dem Drehwinkel und/oder dem Verschiebeweg ermittelt wird.

Außerdem betrifft die Erfindung ein Verfahren zum Betreiben eines Kraftfahrzeugs.

Ferner betrifft die Erfindung eine Vorrichtung zum Ermitteln einer Spannkraft, mit einem Auswertegerät.

Stand der Technik

Ein Kraftfahrzeug weist üblicherweise mehrere drehbar gelagerte Räder auf. Um eine Fahrtgeschwindigkeit des Kraftfahrzeugs zu verringern, weist das Kraftfahrzeug in der Regel eine Bremsanlage mit zumindest einer Bremseinrichtung auf. Die Bremseinrichtung ist einem der Räder des Kraftfahrzeugs zugeordnet und dazu ausgebildet, ein Reibbremsmoment zu erzeugen, durch das eine aktuelle Drehgeschwindigkeit des Rads verringert wird. Hierzu weist die Bremseinrichtung ein drehfest mit dem Rad verbundenes Bremselement wie zum Beispiel eine Bremsscheibe und zumindest einen gegen das Bremselement pressbaren Bremskörper auf. Wird der Bremskörper gegen das Bremselement gepresst, so wird das Reibbremsmoment erzeugt. Vorzugsweise weist die Bremsanlage mehrere Bremseinrichtungen auf, wobei jede der Bremseinrichtungen jeweils einem anderen der Räder zugeordnet ist.

Immer häufiger weisen Bremsanlagen zur Betätigung der Bremseinrichtung zudem einen Elektromotor mit einer insbesondere mehrphasigen Motorwicklung und einem drehbar gelagerten Rotor auf. Der Rotor ist dabei durch eine Getriebeeinrichtung derart mit dem Bremskörper gekoppelt, dass durch eine Drehung des Rotors eine Spannkraft erzeugbar ist, durch die der Bremskörper gegen das Bremselement gepresst wird. Die Drehung des Rotors wird also durch die Getriebeeinrichtung in eine Verschiebung des Bremskörpers umgewandelt. Eine Höhe der dabei erzeugten Spannkraft korrespondiert mit einer Höhe des Reibbremsmomentes. Je höher die Spannkraft ist, desto höher ist auch das Reibbremsmoment. Der Rotor ist dabei durch eine Beaufschlagung der Motorwicklung mit einem elektrischen Motorstrom drehbar.

Aus dem Stand der Technik sind Verfahren zum Ermitteln der Höhe der erzeugten Spannkraft bekannt. Die Kenntnis der Spannkraft ermöglicht eine vorteilhafte Regelung des Elektromotors. Dabei ist es bekannt, einen Drehwinkel des Rotors und/oder einen Verschiebeweg eines verschiebbar gelagerten Elementes der Getriebeeinrichtung zu ermitteln. Der Drehwinkel und der Verschiebeweg korrespondieren mit der Höhe der Spannkraft. Je größer der Drehwinkel beziehungsweise der Verschiebeweg ist, desto größer ist auch die erzeugte Spannkraft. Entsprechend wird die Höhe der Spannkraft dann in Abhängigkeit von dem Drehwinkel und/oder dem Verschiebeweg ermittelt.

Die Patentschrift KR 101 338 433 B1 offenbart ein Verfahren zum Ermitteln einer Spannkraft einer Bremseinrichtung, bei dem die Spannkraft in Abhängigkeit von einem Drehwinkel eines Rotors eines Elektromotors sowie in Abhängigkeit von einer Höhe eines Motorstroms des Elektromotors ermittelt wird. Ein derartiges Verfahren ist auch in den Offenlegungsschriften EP 3 156 294 A1 und US 2017/321773 A1 beschrieben.

Offenbarung der Erfindung

Das erfindungsgemäße Verfahren mit den Merkmalen des Anspruchs 1 hat den Vorteil, dass die Genauigkeit gesteigert wird, mit der die Höhe der erzeugten Spannkraft ermittelt wird. Erfindungsgemäß ist hierzu vorgesehen, dass eine Höhe des Motorstroms ermittelt wird, und dass die Höhe der Spannkraft in Abhängigkeit von der Höhe des Motorstroms ermittelt wird. Bei schlupfbehafteten Getriebeeinrichtungen führt die alleinige Berücksichtigung des Drehwinkels und/oder des Verschiebewegs mit zunehmendem absoluten Drehwinkel beziehungsweise Verschiebeweg zu Ungenauigkeiten beim Ermitteln der Höhe der erzeugten Spannkraft. Diese Ungenauigkeiten werden durch die zusätzliche Berücksichtigung der Höhe des Motorstroms zumindest teilweise kompensiert. Auch die Höhe des Motorstroms korrespondiert zumindest in bestimmten Betriebspunkten des Elektromotors mit der Höhe der erzeugten Spannkraft. Beispielsweise steigt die Spannkraft mit einer Steigerung des Motorstroms. Vorzugsweise wird der Motorstrom erfasst beziehungsweise gemessen. Auch darunter ist ein Ermitteln des Motorstroms zu verstehen. Es ist dann also eine Sensoreinrichtung vorhanden, die dazu ausgebildet ist, die Höhe des Motorstroms zu erfassen. Alternativ dazu wird vorzugsweise ein Parameter erfasst beziehungsweise gemessen, der mit der Höhe des Motorstroms korrespondiert, beispielsweise eine elektrische Motorspannung der Motorwicklung. Die Höhe des Motorstroms wird dann in Abhängigkeit von dem erfassten Parameter ermittelt.

Gemäß einer bevorzugten Ausführungsform ist vorgesehen, dass die Höhe der Spannkraft in Abhängigkeit von einer ersten Kennlinie ermittelt wird, die die Spannkraft in Abhängigkeit von dem Drehwinkel oder dem Verschiebeweg beschreibt. Anhand der ersten Kennlinie ist die erzeugte Spannkraft präzise ermittelbar. Mittels der ersten Kennlinie kann einer Vielzahl von Drehwinkeln beziehungsweise Verschiebewegen jeweils eine entsprechende Spannkraft zugeordnet werden.

Vorzugsweise wird die erste Kennlinie in Abhängigkeit von der ermittelten Höhe des Motorstroms verändert. Hierdurch wird eine auswertungstechnisch einfache Berücksichtigung der Höhe des Motorstroms erreicht. Beispielsweise wird eine Steigung der ersten Kennlinie in Abhängigkeit von der ermittelten Höhe des Motorstroms verändert.

Erfindungsgemäß ist vorgesehen, dass in Abhängigkeit von der Höhe des Motorstroms einerseits und dem ermittelten Drehwinkel andererseits ein korrigierter Drehwinkel ermittelt wird, wobei die Höhe der Spannkraft in Abhängigkeit von dem korrigierten Drehwinkel ermittelt wird, und/oder dass in Abhängigkeit von der Höhe des Motorstroms einerseits und dem ermittelten Verschiebeweg andererseits ein korrigierter Verschiebeweg ermittelt wird, wobei die Höhe der Spannkraft in Abhängigkeit von dem korrigierten Verschiebeweg ermittelt wird. Der ursprünglich ermittelte Drehwinkel beziehungsweise der ursprünglich ermittelte Verschiebeweg werden also in Abhängigkeit von der ermittelten Höhe des Motorstroms korrigiert. Beispielsweise wird in Abhängigkeit von der Höhe des Motorstroms ein Korrekturfaktor ermittelt und der ermittelte Drehwinkel beziehungsweise der ermittelte Verschiebeweg wird zur Korrektur mit dem Korrekturfaktor multipliziert. Entsprechend werden dann der korrigierte Drehwinkel beziehungsweise der korrigierte Verschiebeweg dem Ermitteln der Höhe der Spannkraft zugrunde gelegt. Beispielsweise wird die Höhe der Spannkraft in Abhängigkeit von dem korrigierten Drehwinkel beziehungsweise dem korrigierten Verschiebeweg mittels der ersten Kennlinie ermittelt.

Gemäß einer bevorzugten Ausführungsform ist vorgesehen, dass in Abhängigkeit von der Höhe des Motorstroms und einer zweiten Kennlinie, die eine Spannkraftübersetzung der Bremseinrichtung in Abhängigkeit von der Höhe des Motorstroms beschreibt, eine strombasierte Spannkraft ermittelt wird, wobei die erste Kennlinie in Abhängigkeit von der strombasierten Spannkraft verändert wird, und/oder wobei der korrigierte Drehwinkel und/oder der korrigierte Verschiebeweg in Abhängigkeit von der strombasierten Spannkraft ermittelt werden. Durch die Verwendung der zweiten Kennlinie wird eine präzise Berücksichtigung der ermittelten Höhe des Motorstroms beim Ermitteln der Spannkraft erreicht. Mittels der zweiten Kennlinie kann einer Vielzahl von Motorstromwerten jeweils eine entsprechende Spannkraftübersetzung zugeordnet werden. Die strombasierte Spannkraft kann dann beispielsweise mittels der Gleichung

$$F_{Spann,I} = K_{F,I}(I_{Mot}) \times I_{Mot}$$

ermittelt werden, wobei $F_{Spann,I}$ die strombasierte Spannkraft, $K_{F,I}$ die Spannkraftübersetzung und $I_{Mot}$ den ermittelten Motorstrom beschreibt.

Erfindungsgemäß wird überwacht, ob eine Korrektursituation vorliegt, wobei der korrigierte Drehwinkel und/oder der korrigierte Verschiebeweg nur bei Vorliegen der Korrektursituation ermittelt werden. Vorzugsweise wird die Kennlinie nur bei Vorliegen der Korrektursituation in Abhängigkeit von der Höhe des Motorstroms verändert. Unter einer Korrektursituation ist eine Situation zu verstehen, in der davon auszugehen ist, dass durch die Berücksichtigung der Höhe des Motorstroms eine gewünschte Genauigkeitssteigerung beim Ermitteln der Höhe der erzeugten Spannkraft erreicht wird. Liegt die Korrektursituation nicht vor, so bleibt die ermittelte Höhe des Motorstroms beim Ermitteln der Höhe der erzeugten Spannkraft vorzugsweise unberücksichtigt.

Gemäß einer bevorzugten Ausführungsform ist vorgesehen, dass eine Drehgeschwindigkeitsschwelle vorgegeben wird, wobei bei Vorliegen einer die Drehgeschwindigkeitsschwelle unterschreitenden Drehgeschwindigkeit des Rotors festgestellt wird, dass die Korrektursituation vorliegt, und/oder dass eine Verschiebegeschwindigkeitsschwelle vorgegeben wird, wobei bei Vorliegen einer die Verschiebegeschwindigkeitsschwelle unterschreitenden Verschiebegeschwindigkeit des Elementes festgestellt wird, dass die Korrektursituation vorliegt. Es wird dabei davon ausgegangen, dass die Korrektursituation vorliegt, wenn sich die Bremseinrichtung beziehungsweise der Elektromotor in einem statischen Zustand befinden, wenn sich also der Zustand der Bremseinrichtung und des Elektromotors nicht mehr oder nur wenig verändert. Dies ist anhand der Drehgeschwindigkeit beziehungsweise der Verschiebegeschwindigkeit zuverlässig feststellbar.

Vorzugsweise wird eine Stromänderungsschwelle vorgegeben, wobei bei Vorliegen einer die Stromänderungsschwelle unterschreitenden Motorstromänderung festgestellt wird, dass die Korrektursituation vorliegt. Wie vorstehend erwähnt, liegt die Korrektursituation vor, wenn sich der Elektromotor in einem statischen Zustand befindet. Demgemäß ist das Vorliegen der Korrektursituation auch in Abhängigkeit von der Motorstromänderung des Motorstroms zuverlässig feststellbar.

Die Erfindung betrifft außerdem ein Verfahren zum Betreiben eines Kraftfahrzeugs, wobei das Kraftfahrzeug wenigstens ein drehbar gelagertes Rad und eine Bremsanlage mit zumindest einer Bremseinrichtung und zumindest einem Elektromotor aufweist, wobei die Bremseinrichtung ein drehfest mit dem Rad verbundenes Bremselement und zumindest einen gegen das Bremselement pressbaren Bremskörper aufweist, wobei der Elektromotor eine Motorwicklung und einen drehbar gelagerten Rotor aufweist, wobei der Rotor durch eine Getriebeeinrichtung derart mit dem Bremskörper gekoppelt ist, dass durch eine Drehung des Rotors eine Spannkraft erzeugbar ist, durch die der Bremskörper gegen das Bremselement gepresst wird, wobei der Rotor durch eine Beaufschlagung der Motorwicklung mit einem elektrischen Motorstrom drehbar ist, wobei eine Höhe der erzeugten Spannkraft ermittelt wird, und wobei die Motorwicklung derart mit dem Motorstrom beaufschlagt wird, dass die erzeugte Spannkraft einer vorgegebenen Soll-Spannkraft entspricht. Das Verfahren zum Betreiben des Kraftfahrzeugs zeichnet sich mit den Merkmalen des Anspruchs 8 dadurch aus, dass die Höhe der Spannkraft durch das erfindungsgemäße Verfahren zum Ermitteln der Spannkraft ermittelt wird. Auch daraus ergeben sich die bereits genannten Vorteile. Weitere bevorzugte Merkmale und Merkmalskombinationen ergeben sich aus dem zuvor Beschriebenen sowie aus den Ansprüchen.

Die erfindungsgemäße Vorrichtung zum Ermitteln einer Spannkraft einer Bremseinrichtung eines Kraftfahrzeugs, wobei das Kraftfahrzeug wenigstens ein drehbar gelagertes Rad und eine Bremsanlage mit zumindest einer Bremseinrichtung und zumindest einem Elektromotor aufweist, wobei die Bremseinrichtung ein drehfest mit dem Rad verbundenes Bremselement und zumindest einen gegen das Bremselement pressbaren Bremskörper aufweist, wobei der Elektromotor eine Motorwicklung und einen drehbar gelagerten Rotor aufweist, wobei der Rotor durch eine Getriebeeinrichtung derart mit dem Bremskörper gekoppelt ist, dass durch eine Drehung des Rotors eine Spannkraft erzeugbar ist, durch die der Bremskörper gegen das Bremselement gepresst wird, und wobei der Rotor durch eine Beaufschlagung der Motorwicklung mit einem elektrischen Motorstrom drehbar ist, zeichnet sich mit den Merkmalen des Anspruchs 9 durch ein Auswertegerät aus, das speziell dazu hergerichtet ist, bei bestimmungsgemäßem Gebrauch das erfindungsgemäße Verfahren zum Ermitteln der Spannkraft durchzuführen. Auch daraus ergeben sich die bereits genannten Vorteile. Weitere bevorzugte Merkmale und Merkmalskombinationen ergeben sich aus dem zuvor Beschriebenen sowie aus den Ansprüchen.

Gemäß einer bevorzugten Ausführungsform ist die Getriebeeinrichtung unmittelbar beziehungsweise direkt mit dem Bremskörper gekoppelt. Insofern liegt das verschiebbar gelagerte Element oder ein weiteres verschiebbar gelagertes Element der Getriebeeinrichtung zumindest bei einer Betätigung der Bremseinrichtung bezogen auf eine Verschiebeachse, entlang der der Bremskörper verschiebbar ist, axial direkt an dem Bremskörper an. Auf eine hydraulische Verbindung zwischen der Getriebeeinrichtung und dem Bremskörper wird dabei verzichtet. Beispielsweise weist die Getriebeeinrichtung ein Planetenwälzgetriebe auf, wobei es sich bei dem verschiebbar gelagerten Element dann um eine Planetenwälzgewindespindel handelt. Üblicherweise ist mehreren Rädern des Kraftfahrzeugs jeweils eine andere Bremseinrichtung zugeordnet. Vorzugsweise ist dann jeder der Bremseinrichtungen jeweils ein anderer Elektromotor und jeweils eine andere Getriebeeinrichtung zugeordnet. Das Auswertegerät ist dann dazu ausgebildet, die durch die verschiedenen Elektromotoren erzeugten Spannkräfte mittels des erfindungsgemäßen Verfahrens zu ermitteln.

Gemäß einer weiteren bevorzugten Ausführungsform ist die Getriebeeinrichtung mit einem Hauptbremszylinder der Bremsanlage derart gekoppelt, dass bei einer Beaufschlagung der Motorwicklung mit dem Motorstrom ein in dem Hauptbremszylinder verschiebbar gelagerter Hydraulikkolben betätigt wird. Der Hauptbremszylinder ist fluidtechnisch derart mit dem Bremskörper verbunden, dass der Bremskörper bei einer Betätigung des Hydraulikkolbens gegen das Bremselement gepresst wird. Insofern ist die Getriebeeinrichtung gemäß dieser Ausführungsform mittelbar beziehungsweise indirekt mit dem Bremskörper gekoppelt.

Im Folgenden wird die Erfindung anhand der Zeichnungen näher erläutert. Dazu zeigen

Figur 1     ein Kraftfahrzeug in einer vereinfachten Darstellung,

Figur 2     ein weiteres Kraftfahrzeug in einer vereinfachten Darstellung,

Figur 3     eine erste Kennlinie,

Figur 4     eine zweite Kennlinie und

Figur 5     ein Verfahren zum Ermitteln einer Spannkraft.

Figur ein zeigt in einer vereinfachten Darstellung ein Kraftfahrzeug 1. Das Kraftfahrzeug 1 weist eine Vorderradachse 2 und eine Hinterradachse 3 auf. Die Vorderradachse 2 weist ein drehbar gelagertes erstes Rad 4 und ein drehbar gelagertes zweites Rad 5 auf. Die Hinterachse 3 weist ein drehbar gelagertes drittes Rads 6 und ein drehbar gelagertes viertes Rad 7 auf.

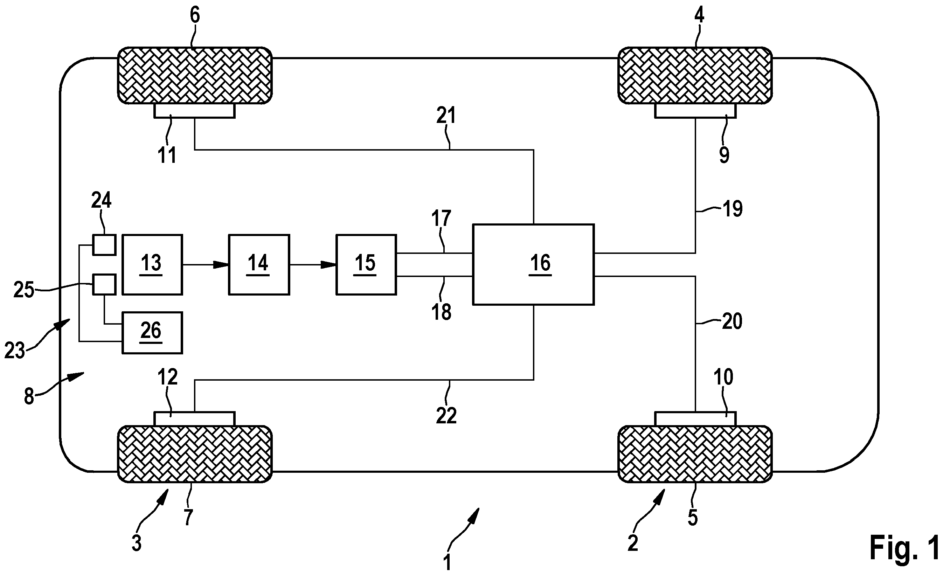

Das Kraftfahrzeug 1 weist außerdem eine Bremsanlage 8 auf. Die Bremsanlage 8 weist eine der Anzahl der Räder entsprechende Anzahl an Bremseinrichtungen 9, 10, 11 und 12 auf. Die Bremseinrichtungen 9, 10, 11 und 12 sind in Figur 1 lediglich schematisch dargestellt. Jedem der Räder 4, 5, 6 und 7 ist jeweils eine andere der Bremseinrichtungen 9, 10, 11 oder 12 zugeordnet. Die Bremseinrichtungen 9, 10, 11 und 12 sind dazu ausgebildet, ein Reibbremsmoment zu erzeugen, um die Drehgeschwindigkeit des Rads zu verringern, dem sie zugeordnet sind. Beispielsweise ist eine erste Bremseinrichtung 9 der Bremseinrichtungen dazu ausgebildet, die aktuelle Drehgeschwindigkeit des ersten Rads 4 zu verringern. Hierzu weist die erste Bremseinrichtung 9 ein drehfest mit dem ersten Rad 4 verbundenes Bremselement und zumindest einen gegen das Bremselement pressbaren Bremskörper auf. Die Bremseinrichtungen 10, 11 und 12 entsprechen bezüglich ihrer Ausgestaltung der ersten Bremseinrichtung 9. Insofern weisen auch die Bremseinrichtungen 10, 11 und 12 jeweils ein Bremselement und zumindest einen Bremskörper auf, der gegen das Bremselement pressbar ist.

Die Bremsanlage 8 weist außerdem einen Elektromotor 13 auf. Auch der Elektromotor 13 ist in Figur 1 lediglich schematisch dargestellt. Der Elektromotor 13 weist einen drehbar gelagerten Rotor und eine Motorwicklung auf. Dabei ist der Rotor durch eine Beaufschlagung der Motorwicklung mit einem elektrischen Motorstrom $I_{Mot}$ drehbar.

Der Rotor ist mit einer Getriebeeinrichtung 14 gekoppelt. Die Getriebeeinrichtung 14 weist zumindest ein verschiebbar gelagertes Element auf und ist dazu ausgebildet, eine Drehung des Rotors in eine Verschiebung des verschiebbar gelagerten Elementes zu wandeln. Beispielsweise weist die Getriebeeinrichtung 14 hierzu ein Spindelgetriebe mit einer drehbar gelagerten Spindelmutter und einer verschiebbar gelagerten Spindel auf.

Die Bremsanlage 8 weist außerdem einen Hauptbremszylinder 15 auf. Vorliegend ist der Hauptbremszylinder 15 als Tandem-Hauptbremszylinder 15 ausgebildet, sodass in dem Hauptbremszylinder 15 zwei Hydraulikkolben verschiebbar gelagert sind. Der Rotor ist durch die Getriebeeinrichtung 14 derart mit dem Hauptbremszylinder 15 gekoppelt, dass die Hydraulikkolben durch eine Drehung des Rotors verschiebbar sind.

Die Bremsanlage 8 weist außerdem einen Hydraulikblock 16 auf. Der Hauptbremszylinders 15 ist durch zwei Eingangsleitungen 17 und 18 fluidtechnisch mit dem Hydraulikblock 16 verbunden. Der Hydraulikblock 16 ist wiederum durch vier Ausgangsleitungen 19, 20, 21 und 22 fluidtechnisch mit den Radbremszylindern der Bremseinrichtungen 9, 10, 11 und 12 verbunden. Werden die Hydraulikkolben in eine Betätigungsrichtung verschoben, so wird durch eine in den Leitungen 17, 18, 19, 20, 21 und 22 vorhandene Hydraulikflüssigkeit eine auf die Bremskörper wirkende Spannkraft $F_{Spann}$ erzeugt, durch die die Bremskörper gegen die jeweiligen Bremselemente gepresst werden.

Weil der Rotor durch die Getriebeeinrichtung 14 mit den Hydraulikkolben gekoppelt ist, ist die Spannkraft durch die Drehung des Rotors erzeugbar. Eine Höhe der erzeugten Spannkraft korrespondiert dann mit einem Drehwinkel φ des Rotors und einem Verschiebeweg des verschiebbar gelagerten Elementes. Je größer der Drehwinkel φ ist, desto höher ist auch die erzeugte Spannkraft $F_{Spann}$. Weiterhin korrespondiert die Höhe der erzeugten Spannkraft $F_{Spann}$ mit der Höhe des Reibbremsmomentes. Je höher die Spannkraft $F_{Spann}$ ist, desto höher ist auch das Reibbremsmoment.

Das Kraftfahrzeug 1 weist außerdem eine Vorrichtung 23 auf. Die Vorrichtung 23 weist einen Drehwinkelsensor 24 auf, der dem Rotor zugeordnet und dazu ausgebildet ist, den Drehwinkel φ des Rotors zu erfassen. Die Vorrichtung 23 weist außerdem einen Stromsensor 25 auf, der der Motorwicklung zugeordnet und dazu ausgebildet ist, die Höhe des durch die Motorwicklung fließenden elektrischen Motorstroms $I_{Mot}$ zu erfassen. Zudem weist die Vorrichtung 23 ein Auswertegerät 26 auf. Das Auswertegerät 26 ist kommunikationstechnisch mit dem Drehwinkelsensor 24 und dem Stromsensor 25 verbunden, sodass dem Auswertegerät 26 der erfasste Drehwinkel φ und die Höhe des Motorstroms $I_{Mot}$ bereitgestellt werden. Das Auswertegerät 26 ist dazu ausgebildet, die Höhe der erzeugten Spannkraft $F_{Spann}$ in Abhängigkeit von dem Drehwinkel φ des Rotors einerseits und der Höhe des Motorstroms $I_{Mot}$ andererseits zu ermitteln.

Das Auswertegerät 26 ist außerdem dazu ausgebildet, Ansteuersignale für Schalter einer Leistungselektronik des Elektromotors 13 zu ermitteln und die Schalter in Abhängigkeit von den Ansteuersignalen anzusteuern. Insofern ist das Auswertegerät 26 als Steuergerät 26 ausgebildet. Soll durch die Bremseinrichtungen 9, 10, 11 und 12 ein Reibbremsmoment erzeugt werden, so steuert das Auswertegerät 26 die Leistungselektronik des Elektromotors 13 derart geregelt an, dass die erzeugte Spannkraft $F_{Spann}$ einer vorgegebenen Soll-Spannkraft entspricht. Die Motorwicklung wird also derart mit dem elektrischen Motorstrom $I_{Mot}$ beaufschlagt, dass die erzeugte Spannkraft $F_{Spann}$ der vorgegebenen Soll-Spannkraft entspricht. Beispielsweise wird die Soll-Spannkraft durch Betätigung eines Bremspedals des Kraftfahrzeugs 1 durch einen Fahrer des Kraftfahrzeugs 1 vorgegeben.

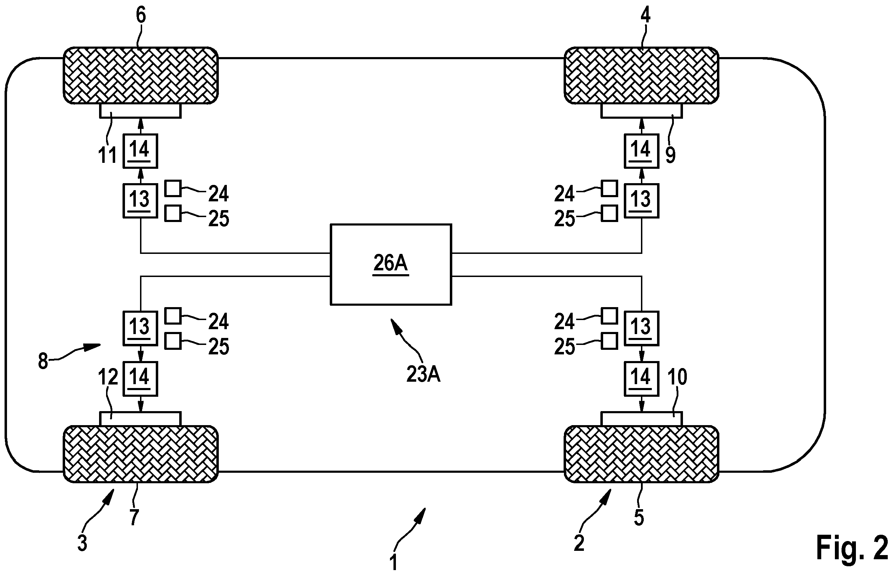

Figur 2 zeigt ein weiteres Ausführungsbeispiel des Kraftfahrzeugs 1. Das in Figur 2 dargestellte Kraftfahrzeug 1 unterscheidet sich von dem in Figur 1 dargestellten Kraftfahrzeugs 1 im Hinblick auf die Ausgestaltung der Bremsanlage 8. Auch das in Figur 2 dargestellte Kraftfahrzeug weist die Bremseinrichtungen 9, 10, 11 und 12 auf.

Die Bremsanlage 8 des in Figur 2 dargestellten Kraftfahrzeugs 1 weist eine der Anzahl an Bremseinrichtungen 9, 10, 11 und 12 entsprechende Anzahl an Elektromotoren 13 auf. Zudem weist die Bremsanlage 8 eine der Anzahl an Bremseinrichtungen 9, 10, 11 und 12 entsprechende Anzahl an Getriebeeinrichtungen 14 auf. Jeder Bremseinrichtung 9, 10, 11 und 12 ist jeweils ein anderer der Elektromotoren 13 und eine andere der Getriebeeinrichtungen 14 zugeordnet.

Auch die Rotoren der Elektromotoren 13 sind durch die Getriebeeinrichtungen 14 derart mit den Bremskörpern der Bremseinrichtungen 9, 10, 11 und 12 gekoppelt, dass durch eine Beaufschlagung der Motorwicklungen der Elektromotoren 13 mit einem Motorstrom $I_{Mot}$ jeweils eine Spannkraft $F_{Spann}$ erzeugbar ist, durch die die Bremskörper der Bremseinrichtungen 9, 10, 11 und 12 gegen die jeweiligen Bremselemente gepresst werden. Die Getriebeeinrichtungen 14 sind dabei jeweils direkt mit den Bremskörpern gekoppelt, also ohne Zwischenschaltung eines Hauptbremszylinders.

Die Vorrichtung 23A des in Figur 2 dargestellten Kraftfahrzeugs 1 weist eine der Anzahl an Elektromotoren 13 entsprechende Anzahl an Drehwinkelsensoren 24 auf, wobei jedem der Elektromotoren 13 jeweils ein anderer der Drehwinkelsensoren 24 zugeordnet ist.

Die Vorrichtung 23A weist außerdem eine der Anzahl an Elektromotoren 13 entsprechende Anzahl an Stromsensoren 25 auf, wobei jedem der Elektromotoren 13 jeweils ein anderer der Stromsensoren 25 zugeordnet ist.

Die Drehwinkelsensoren 24 und die Stromsensoren 25 sind kommunikationstechnisch mit dem Auswertegerät 26A verbunden, sodass dem Auswertegerät 26A die durch die Drehwinkelsensoren 24 erfassten Drehwinkel $\varphi$ sowie die durch die Stromsensoren 25 erfassten Motorströme $I_{Mot}$ bereitgestellt werden.

Das Auswertegerät 26A des in Figur 2 dargestellten Kraftfahrzeugs 1 ist dazu ausgebildet, die Höhe der durch die Elektromotoren 13 erzeugten Spannkräfte $F_{Spann}$ in Abhängigkeit von dem Drehwinkel $\varphi$ des jeweiligen Rotors einerseits und der Höhe des jeweiligen Motorstroms $I_{Mot}$ andererseits zu ermitteln.

Zudem ist das Ansteuergerät 26A dazu ausgebildet, Ansteuersignale für Schalter von Leistungselektroniken der Elektromotoren 13 zu ermitteln und die Schalter in Abhängigkeit von den Ansteuersignalen anzusteuern. Das Auswertegerät 26A ist dabei dazu ausgebildet, die Elektromotoren 13 unabhängig voneinander anzusteuern. Das Auswertegerät 26A steuert dabei die Leistungselektroniken derart an, dass die durch die Elektromotoren 13 erzeugten Spannkräfte $F_{Spann}$ jeweils der vorgegebenen Soll-Spannkraft entsprechen, wie vorstehend mit Bezug auf das Auswertegerät 26 beschrieben.

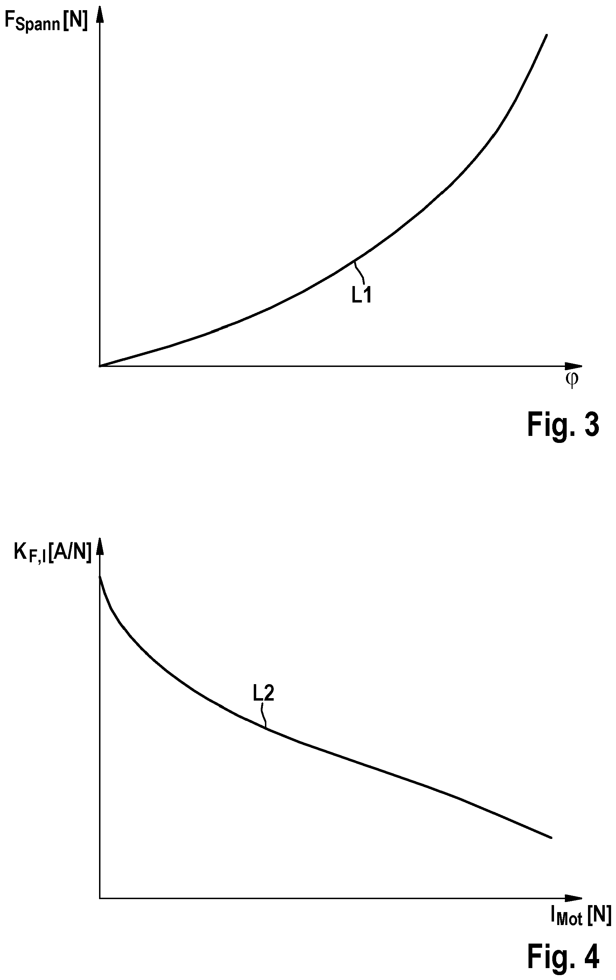

Figur 3 zeigt eine erste Kennlinie L1. Die erste Kennlinie L1 beschreibt die Höhe der erzeugten Spannkraft $F_{Spann}$ in Abhängigkeit von dem Drehwinkel $\varphi$ des Rotors. Wie aus Figur 3 ersichtlich ist, steigt die Spannkraft $F_{Spann}$ mit einer Steigerung des Drehwinkels $\varphi$.

Figur 4 zeigt eine zweite Kennlinie L2. Die zweite Kennlinie L2 beschreibt die Höhe einer Spannkraftübersetzung $K_{F,I}$ der Bremseinrichtungen in Abhängigkeit von dem Motorstrom $I_{Mot}$. Wie aus Figur 4 ersichtlich ist, verringert sich die Spannkraftübersetzung $K_{F,I}$ mit einer Steigerung des Motorstroms $I_{Mot}$.

Wie zuvor erwähnt steuert das Auswertegerät 26 den Elektromotor 13 derart an, dass die erzeugte Spannkraft $F_{Spann}$ der vorgegebenen Soll-Spannkraft entspricht. Entsprechend steuert das Auswertegerät 26A die Elektromotoren 13 derart an, dass die jeweils erzeugte Spannkraft $F_{Spann}$ der vorgegebenen Soll-Spannkraft entspricht.

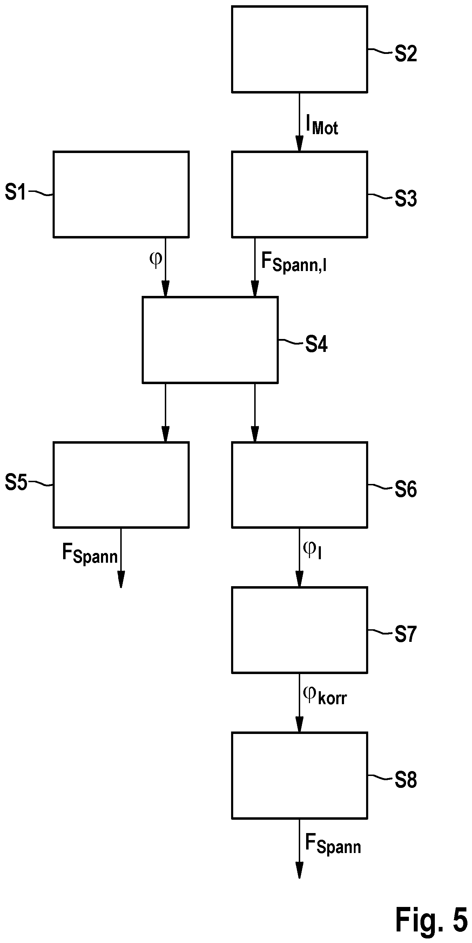

Im Folgenden wird mit Bezug auf Figur 5 ein vorteilhaftes Verfahren zum Ermitteln der Höhe der erzeugten Spannkraft $F_{Spann}$ erläutert. Hierzu zeigt Figur 5 das Verfahren anhand eines Flussdiagramms. Das Verfahren wird beispielhaft anhand des Auswertegeräts 26 des in Figur 1 dargestellten Kraftfahrzeugs 1 beschrieben. Allerdings ist auch das Auswertegerät 26A des in Figur 2 dargestellten Kraftfahrzeugs 1 dazu ausgebildet, das Verfahren durchzuführen und mittels des Verfahrens die durch die Elektromotoren 13 jeweils erzeugte Spannkraft $F_{Spann}$ zu ermitteln.

In einem ersten Schritt S1 erfasst der Drehwinkelsensor 24 den aktuellen Drehwinkel $\varphi$ des Rotors. Zudem stellt der Drehwinkelsensor 24 den erfassten Drehwinkel $\varphi$ dem Auswertegerät 26 bereit.

In einem zweiten Schritt S2 erfasst der Stromsensor 25 die Höhe des Motorstroms $I_{Mot}$. Zudem stellt der Stromsensor 25 die erfasste Höhe des Motorstroms $I_{Mot}$ dem Auswertegerät 26 bereit.

Zumindest die Schritte S1 und S2 werden laufend durchgeführt, sodass dem Auswertegerät 26 ein Verlauf des Drehwinkels $\varphi$ und ein Verlauf des Motorstroms $I_{Mot}$ bereitgestellt werden.

In einem dritten Schritt S3 ermittelt das Auswertegerät 26 in Abhängigkeit von der Höhe des Motorstroms $I_{Mot}$ mittels der zweiten Kennlinie L2 eine mit der Höhe des Motorstroms $I_{Mot}$ korrespondierende Spannkraftübersetzung $K_{F,I}$. In Abhängigkeit von der ermittelten Spannkraftübersetzung $K_{F,I}$ ermittelt das Auswertegerät 26 dann in dem Schritt S3 mittels der Gleichung $F_{Spann,I} = K_{F,I}(I_{Mot}) \times I_{Mot}$ eine strombasierte Spannkraft $F_{Spann,I}$.

In einem vierten Schritt S4 überprüft das Auswertegerät 26, ob eine Korrektursituation vorliegt. Von einer Korrektursituation wird ausgegangen, wenn sich die Bremseinrichtungen 9, 10, 11 und 12 und der Elektromotor 13 in einem statischen Zustand befinden. Hierzu gibt Auswertegerät 26 eine Drehgeschwindigkeitsschwelle und eine Stromänderungsschwelle vor. Zudem ermittelt das Auswertegerät 26 in Abhängigkeit von dem Verlauf des Drehwinkels $\varphi$ eine Drehgeschwindigkeit des Rotors und in Abhängigkeit von dem Verlauf des Motorstroms $I_{Mot}$ eine Motorstromänderung des Motorstroms $I_{Mot}$. Das Auswertegerät 26 stellt dann fest, dass die Korrektursituation vorliegt, wenn die ermittelte Drehgeschwindigkeit des Rotors die Drehgeschwindigkeitsschwelle unterschreitet und die ermittelte Motorstromänderung die Stromänderungsschwelle unterschreitet.

Stellt das Auswertegerät 26 in dem Schritt S4 fest, dass die Korrektursituation nicht vorliegt, so wird auf einen fünften Schritt S5 verwiesen. In dem fünften Schritt S5 ermittelt dann das Auswertegerät 26 die Höhe der erzeugten Spannkraft $F_{Spann}$ in Abhängigkeit von dem in dem Schritt S1 erfassten Drehwinkel $\varphi$ mittels der ersten Kennlinie L1. Die Höhe des Motorstroms $I_{Mot}$ bleibt dabei unberücksichtigt.

Stellt das Auswertegerät 26 in dem Schritt S4 jedoch fest, dass die Korrektursituation vorliegt, so wird auf einen sechsten Schritt S6 verwiesen. In dem sechsten Schritt S6 ermittelt das Auswertegerät 26 dann in Abhängigkeit von der in dem dritten Schritt S3 ermittelten strombasierten Spannkraft $F_{Spann,I}$ mittels der ersten Kennlinie L1 einen strombasierten Drehwinkel $\varphi_I$ des Rotors.

In einem siebten Schritt S7 vergleicht das Auswertegerät 26 den in dem Schritt S6 ermittelten strombasierten Drehwinkel $\varphi_I$ mit dem in dem Schritt S1 erfassten Drehwinkel $\varphi$. Weicht der erfasste Drehwinkel $\varphi$ von dem strombasierten Drehwinkel $\varphi_I$ ab, so korrigiert das Auswertegerät 26 den erfassten Drehwinkel $\varphi$. Das Auswertegerät 26 ermittelt also einen korrigierten Drehwinkel $\varphi_{korr}$. Beispielsweise wird als korrigierter Drehwinkel $\varphi_{korr}$ ein den erfassten Drehwinkel $\varphi$ unterschreitender Drehwinkel ermittelt, wenn der strombasierte Drehwinkel $\varphi_I$ den erfassten Drehwinkel $\varphi$ unterschreitet.

In einem achten Schritt S8 ermittelt das Auswertegerät 26 dann die erzeugte Spannkraft $F_{Spann}$ in Abhängigkeit von dem korrigierten Drehwinkel $\varphi_{korr}$ mittels der ersten Kennlinie L1.

Vorzugsweise verändert das Auswertegerät 26 in Abhängigkeit von dem korrigierten Drehwinkel $\varphi_{korr}$ die erste Kennlinie L1. Das Auswertegerät 26 ermittelt also eine korrigierte erste Kennlinie. Wird der Schritt S5 erneut durchgeführt, so ermittelt das Auswertegerät 26 dann die erzeugte Spannkraft $F_{Spann}$ in Abhängigkeit von dem erfassten Drehwinkel $\varphi$ mittels der korrigierten ersten Kennlinie.

Wie zuvor erwähnt korrespondiert der Drehwinkel $\varphi$ des Rotors mit dem Verschiebeweg des verschiebbar gelagerten Elementes der Getriebeeinrichtung 14. Gemäß einem weiteren Ausführungsbeispiel des Verfahrens wird der Verschiebeweg des Elementes erfasst und anstelle des erfassten Drehwinkels $\varphi$ dem Ermitteln der erzeugten Spannkraft $F_{Spann}$ zugrunde gelegt. Beispielsweise wird dann eine erste Kennlinie L1 verwendet, die die erzeugte Spannkraft $F_{Spann}$ in Abhängigkeit von dem Verschiebeweg des Elementes beschreibt.

## Patentansprüche

1. Verfahren zum Ermitteln einer Spannkraft einer Bremseinrichtung eines Kraftfahrzeugs, wobei das Kraftfahrzeug (1) wenigstens ein drehbar gelagertes Rad (4) und eine Bremsanlage (8) mit zumindest einer Bremseinrichtung (9) und zumindest einem Elektromotor (13) aufweist, wobei die Bremseinrichtung (9) ein drehfest mit dem Rad (4) verbundenes Bremselement und zumindest einen gegen das Bremselement pressbaren Bremskörper aufweist, wobei der Elektromotor (13) eine Motorwicklung und einen drehbar gelagerten Rotor aufweist, wobei der Rotor durch eine Getriebeeinrichtung (14) derart mit dem Bremskörper gekoppelt ist, dass durch eine Drehung des Rotors eine Spannkraft ($F_{Spann}$) erzeugbar ist, durch die der Bremskörper gegen das Bremselement gepresst wird, wobei der Rotor durch eine Beaufschlagung der Motorwicklung mit einem elektrischen Motorstrom ($I_{Mot}$) drehbar ist, wobei ein Drehwinkel ($\varphi$) des Rotors und/oder ein Verschiebeweg eines verschiebbar gelagerten Elementes der Getriebeeinrichtung (14) ermittelt werden, wobei eine Höhe der erzeugten Spannkraft ($F_{Spann}$) in Abhängigkeit von dem Drehwinkel ($\varphi$) und/oder dem Verschiebeweg ermittelt wird, wobei eine Höhe des Motorstroms ($I_{Mot}$) ermittelt wird, und wobei die Höhe der Spannkraft ($F_{Spann}$) in Abhängigkeit von der Höhe des Motorstroms ($I_{Mot}$) ermittelt wird, **dadurch gekennzeichnet, dass** überwacht wird, ob eine Korrektursituation vorliegt, in der sich die Bremseinrichtung (9) und/oder der Elektromotor (13) in einem statischen Zustand befinden, dass nur bei Vorliegen der Korrektursituation in Abhängigkeit von der Höhe des Motorstroms ($I_{Mot}$) einerseits und dem ermittelten Drehwinkel ($\varphi$) andererseits ein korrigierter Drehwinkel ($\varphi_{korr}$) ermittelt und die Höhe der Spannkraft ($F_{Spann}$) in Abhängigkeit von dem korrigierten Drehwinkel ($\varphi_{korr}$) ermittelt wird, und/oder dass nur bei Vorliegen der Korrektursituation in Abhängigkeit von der Höhe des Motorstroms ($I_{Mot}$) einerseits und dem ermittelten Verschiebeweg andererseits ein korrigierter Verschiebeweg ermittelt und die Spannkraft ($F_{Spann}$) in Abhängigkeit von dem korrigierten Verschiebeweg ermittelt wird.

2. Verfahren nach Anspruch 1, **dadurch gekennzeichnet, dass** die Höhe der Spannkraft ($F_{Spann}$) in Abhängigkeit von einer ersten Kennlinie (L1) ermittelt wird, die die Spannkraft ($F_{Spann}$) in Abhängigkeit von dem Drehwinkel ($\varphi$) oder dem Verschiebeweg beschreibt.

3. Verfahren nach Anspruch 2, **dadurch gekennzeichnet, dass** die erste Kennlinie (L1) in Abhängigkeit von der Höhe des Motorstroms ($I_{Mot}$) verändert wird.

4. Verfahren nach einem der Ansprüche 2 und 3, **dadurch gekennzeichnet, dass** in Abhängigkeit von der Höhe des Motorstroms ($I_{Mot}$) und einer zweiten Kennlinie (L2), die eine Spannkraftübersetzung ($K_{F,I}$) der Bremseinrichtung (9) in Abhängigkeit von der Höhe des Motorstroms ($I_{Mot}$) beschreibt, eine strombasierte Spannkraft ($F_{Spann,I}$) ermittelt wird, wobei die erste Kennlinie (L1) in Abhängigkeit von der strombasierten Spannkraft ($F_{Spann,I}$) verändert wird, und/oder wobei der korrigierte Drehwinkel ($\varphi_{korr}$) und/oder der korrigierte Verschiebeweg in Abhängigkeit von der strombasierten Spannkraft ($F_{Spann,I}$) ermittelt werden.

5. Verfahren nach einem der Ansprüche 2 bis 4, **dadurch gekennzeichnet, dass** die erste Kennlinie (L1) nur bei Vorliegen der Korrektursituation in Abhängigkeit von der Höhe des Motorstroms ($I_{Mot}$) verändert wird.

**6.** Verfahren nach einem der vorhergehenden Ansprüche, **dadurch gekennzeichnet, dass** eine Drehgeschwindigkeitsschwelle vorgegeben wird, wobei bei Vorliegen einer die Drehgeschwindigkeitsschwelle unterschreitenden Drehgeschwindigkeit des Rotors festgestellt wird, dass die Korrektursituation vorliegt, und/oder dass eine Verschiebegeschwindigkeitsschwelle vorgegeben wird, wobei bei Vorliegen einer die Verschiebegeschwindigkeitsschwelle unterschreitenden Verschiebegeschwindigkeit des Elementes festgestellt wird, dass die Korrektursituation vorliegt.

**7.** Verfahren nach einem der vorhergehenden Ansprüche, **dadurch gekennzeichnet, dass** eine Stromänderungsschwelle vorgegeben wird, wobei bei Vorliegen einer die Stromänderungsschwelle unterschreitenden Motorstromänderung festgestellt wird, dass die Korrektursituation vorliegt.

**8.** Verfahren zum Betreiben eines Kraftfahrzeugs, wobei das Kraftfahrzeug (1) wenigstens ein drehbar gelagertes Rad (4) und eine Bremsanlage (8) mit zumindest einer Bremseinrichtung (9) und zumindest einem Elektromotor (13) aufweist, wobei die Bremseinrichtung (9) ein drehfest mit dem Rad (4) verbundenes Bremselement und zumindest einen gegen das Bremselement pressbaren Bremskörper aufweist, wobei der Elektromotor (13) eine Motorwicklung und einen drehbar gelagerten Rotor aufweist, wobei der Rotor durch eine Getriebeeinrichtung (14) derart mit dem Bremskörper gekoppelt ist, dass durch eine Drehung des Rotors eine Spannkraft ($F_{Spann}$) erzeugbar ist, durch die der Bremskörper gegen das Bremselement gepresst wird, wobei der Rotor durch eine Beaufschlagung der Motorwicklung mit einem elektrischen Motorstrom ($I_{Mot}$) drehbar ist, wobei eine Höhe der erzeugten Spannkraft ($F_{Spann}$) ermittelt wird, und wobei die Motorwicklung derart mit dem Motorstrom ($I_{Mot}$) beaufschlagt wird, dass die erzeugte Spannkraft ($F_{Spann}$) einer vorgegebenen Soll-Spannkraft entspricht, **dadurch gekennzeichnet, dass** die Höhe der Spannkraft ($F_{Spann}$) durch ein Verfahren gemäß einem der Ansprüche 1 bis 7 ermittelt wird.

**9.** Vorrichtung zum Ermitteln einer Spannkraft einer Bremseinrichtung eines Kraftfahrzeugs, wobei das Kraftfahrzeug (1) wenigstens ein drehbar gelagertes Rad (4) und eine Bremsanlage (8) mit zumindest einer Bremseinrichtung (9) und zumindest einem Elektromotor (13) aufweist, wobei die Bremseinrichtung (9) ein drehfest mit dem Rad (4) verbundenes Bremselement und zumindest einen gegen das Bremselement pressbaren Bremskörper aufweist, wobei der Elektromotor (13) eine Motorwicklung und einen drehbar gelagerten Rotor aufweist, wobei der Rotor durch eine Getriebeeinrichtung (14) derart mit dem Bremskörper gekoppelt ist, dass durch eine Drehung des Rotors eine Spannkraft ($F_{Spann}$) erzeugbar ist, durch die der Bremskörper gegen das Bremselement gepresst wird, und wobei der Rotor durch eine Beaufschlagung der Motorwicklung mit einem elektrischen Motorstrom ($I_{Mot}$) drehbar ist, **gekennzeichnet durch** ein Auswertegerät (26, 26A), das speziell dazu hergerichtet ist, bei bestimmungsgemäßem Gebrauch das Verfahren gemäß einem der Ansprüche 1 bis 7 durchzuführen.

**Claims**

**1.** Method for determining a clamping force of a brake device of a motor vehicle, wherein the motor vehicle (1) has at least one rotatably mounted wheel (4) and a brake system (8) having at least one brake device (9) and at least one electric motor (13), wherein the brake device (9) has a brake element co-rotationally connected to the wheel (4), and at least one brake body which is able to be pressed against the brake element, wherein the electric motor (13) has a motor winding and a rotatably mounted rotor, wherein the rotor is coupled by a gear device (14) to the brake body in such a manner that, by rotating the rotor, a clamping force ($F_{Spann}$) by which the brake body is pressed against the brake element is able to be generated, whereby the rotor is rotatable by impinging the motor winding with an electric motor current ($I_{Mot}$), wherein a rotation angle ($\phi$) of the rotor and/or a displacement travel of a displaceably mounted element of the gear device (14) are/is determined, wherein a size of the generated clamping force ($F_{Spann}$) is determined as a function of the rotation angle ($\phi$) and/or the displacement travel, wherein a size of the motor current ($I_{Mot}$) is determined, and wherein the size of the clamping force ($F_{Spann}$) is determined as a function of the size of the motor current ($I_{Mot}$), **characterized in that** it is monitored whether there is a correction situation in which the brake device (9) and/or the electric motor (13) are/is in a static state, **in that** only if the correction situation is present, a corrected rotation angle ($\varphi_{korr}$) is determined as a function of the size of the motor current ($I_{Mot}$) on the one hand and the determined rotation angle ($\phi$) on the other hand, and the size of the clamping force ($F_{Spann}$) is determined as a function of the corrected rotation angle ($\phi_{korr}$), and/or **in that** only when the correction situation is present, a corrected displacement travel is determined as a function of the size of motor current ($I_{Mot}$) on the one hand and the determined displacement travel on the other hand, and the clamping force ($F_{Spann}$) is determined as a function of the corrected displacement travel.

**2.** Method according to Claim 1, **characterized in that** the size of the clamping force ($F_{Spann}$) is determined as a function of a first characteristic curve (L1) which describes the clamping force ($F_{Spann}$) as a function of the rotation angle ($\phi$) or the displacement travel.

3. Method according to Claim 2, **characterized in that** the first characteristic curve (L1) is varied as a function of the size of the motor current ($I_{Mot}$).

4. Method according to one of Claims 2 and 3, **characterized in that**, as a function of the size of the motor current ($I_{Mot}$) and a second characteristic curve (L2) which describes the clamping force ratio ($K_{F,I}$) of the brake device (9) as a function of the size of the motor current ($I_{Mot}$), a current-based clamping force ($F_{Spann,I}$) is determined, wherein the first characteristic curve (L1) is varied as a function of the current-based clamping force ($F_{Spann,I}$), and/or wherein the corrected rotation angle ($\phi_{correct}$) and/or the corrected displacement travel are/is determined as a function of the current-based clamping force ($F_{Spann,I}$).

5. Method according to one of Claims 2 to 4, **characterized in that** the first characteristic curve (L1) is varied only when the correction situation as a function of the size of the motor current ($I_{Mot}$) is present.

6. Method according to one of the preceding claims, **characterized in that** a rotating speed threshold is specified, wherein in the presence of a rotating speed of the rotor that falls below the rotating speed threshold, it is determined that the correction situation is present, and/or **in that** a displacement speed threshold is specified, wherein in the presence of a displacement speed of the element that falls below the displacement speed threshold, it is determined that the correction situation is present.

7. Method according to one of the preceding claims, **characterized in that** a current variation threshold is specified, wherein in the presence of a motor current variation that falls below the current variation threshold it is determined that the correction situation is present.

8. Method for operating a motor vehicle, wherein the motor vehicle (1) has at least one rotatably mounted wheel (4) and a brake system (8) having at least one brake device (9) and at least one electric motor (13), wherein the brake device (9) has a brake element co-rotationally connected to the wheel (4), and at least one brake body which is able to be pressed against the brake element, wherein the electric motor (13) has a motor winding and a rotatably mounted rotor, wherein the rotor is coupled by a gear device (14) to the brake body in such a manner that, by rotating the rotor, a clamping force ($F_{Spann}$) by which the brake body is pressed against the brake element is able to be generated, whereby the rotor is rotatable by impinging the motor winding with an electric motor current ($I_{Mot}$), wherein a size of the generated clamping force ($F_{Spann}$) is determined, and whereby the motor winding is impinged with the motor current ($I_{Mot}$) in such a manner that the generated clamping force ($F_{Spann}$) corresponds to a predefined target clamping force, **characterized in that** the size of the clamping force ($F_{Spann}$) is determined by a method according to one of Claims 1 to 7.

9. Device for determining a clamping force of a brake device of a motor vehicle, wherein the motor vehicle (1) has at least one rotatably mounted wheel (4) and a brake system (8) having at least one brake device (9) and at least one electric motor (13), wherein the brake device (9) has a brake element co-rotationally connected to the wheel (4), and at least one brake body which is able to be pressed against the brake element, wherein the electric motor (13) has a motor winding and a rotatably mounted rotor, wherein the rotor is coupled by a gear device (14) to the brake body in such a manner that, by rotating the rotor, a clamping force ($F_{Spann}$) by which the brake body is pressed against the brake element is able to be generated, and wherein the rotor is rotatable by impinging the motor winding with an electric motor current ($I_{Mot}$), **characterized by** an evaluation apparatus (26, 26A) which in its intended use is specially equipped to carry out the method according to one of Claims 1 to 7.

**Revendications**

1. Procédé pour déterminer une force de serrage d'un dispositif de freinage d'un véhicule automobile, le véhicule automobile (1) présentant au moins une roue (4) montée rotative et un système de freinage (8) avec au moins un dispositif de freinage (9) et au moins un moteur électrique (13), le dispositif de freinage (9) présentant un élément de freinage relié de manière solidaire en rotation à la roue (4) et au moins un corps de freinage apte à être pressé contre l'élément de freinage, le moteur électrique (13) présentant un enroulement de moteur et un rotor monté rotatif, le rotor étant relié au corps de freinage par un dispositif de transmission (14) de telle sorte qu'une force de serrage ($F_{Spann}$) puisse être générée par une rotation du rotor, au moyen de laquelle le corps de freinage est pressé contre l'élément de freinage, le rotor étant apte à être tourné par une alimentation de l'enroulement du moteur avec un courant électrique ($I_{Mot}$) de moteur, un angle de rotation ($\varphi$) du rotor et/ou une course de déplacement d'un élément du dispositif de transmission (14) monté de manière déplaçable étant déterminés, un niveau de la force de serrage générée ($F_{Spann}$) étant déterminé en fonction de l'angle de rotation ($\varphi$) et/ou de la course de déplacement, un niveau de courant ($I_{Mot}$) de moteur étant déterminé, et le niveau de la force de serrage ($F_{Spann}$) étant déterminé en fonction du niveau de courant ($I_{Mot}$) de moteur, **caractérisé en ce qu'**il est surveillé s'il existe une situation de correction dans laquelle le dispositif de freinage (9) et/ou le moteur électrique (13) se trouvent dans un état statique, **en ce qu'**un angle de rotation corrigé ($\varphi_{korr}$) n'est déterminé qu'en présence de la situation de correction en fonction du niveau du courant ($I_{Mot}$) de moteur d'une part et de l'angle de rotation déterminé ($\varphi$) d'autre part, et **en ce que** le niveau de la force de serrage ($F_{Spann}$) est déterminé en fonction de l'angle de rotation corrigé ($\varphi_{korr}$), et/ou **en ce qu'**un déplacement corrigé est déterminé uniquement en présence de la situation de correction en fonction du niveau du courant ($I_{Mot}$) de moteur d'une part et de la distance de déplacement déterminée d'autre part, et **en ce que** la force de serrage ($F_{Spann}$) est déterminée en fonction de la distance de déplacement corrigée.

2. Procédé selon la revendication 1, **caractérisé en ce que** le niveau de la force de serrage ($F_{Spann}$) est déterminé en fonction d'une première courbe caractéristique (L1) décrivant la force de serrage ($F_{Spann}$) en fonction de l'angle de rotation ($\varphi$) ou de la course de déplacement.

3. Procédé selon la revendication 2, **caractérisé en ce que** la première courbe caractéristique (L1) est modifiée en fonction du niveau de courant ($I_{Mot}$) de moteur.

4. Procédé selon l'une des revendications 2 et 3, **caractérisé en ce qu'**il est déterminé une force de serrage basée sur le courant ($F_{Spann,I}$), en fonction du niveau de courant ($I_{Mot}$) de moteur et d'une deuxième courbe caractéristique (L2) qui décrit un rapport de force de serrage ($K_{F,I}$) du dispositif de freinage (9) en fonction du niveau de courant ($I_{Mot}$) de moteur, la première courbe caractéristique (L1) étant modifiée en fonction de la force de serrage ($F_{Spann,I}$) basée sur le courant, et/ou l'angle de rotation corrigé ($\varphi_{korr}$) et/ou la course de déplacement corrigée étant déterminés en fonction de la force de serrage ($F_{Spann,I}$) basée sur le courant.

5. Procédé selon l'une des revendications 2 à 4, **caractérisé en ce que** la première courbe caractéristique (L1) n'est modifiée qu'en présence de la situation de correction en fonction du niveau de courant ($I_{Mot}$) de moteur.

6. Procédé selon l'une des revendications précédentes, **caractérisé en ce qu'**un seuil de vitesse de rotation est prédéfini, la présence d'une vitesse de rotation du rotor inférieure au seuil de vitesse de rotation permettant de constater que la situation de correction existe, et/ou **en ce qu'**un seuil de vitesse de déplacement est prédéfini, la présence d'une vitesse de déplacement de l'élément inférieure au seuil de vitesse de déplacement permettant de constater que la situation de correction existe.

7. Procédé selon l'une des revendications précédentes, **caractérisé en ce qu'**un seuil de variation de courant est prédéfini, la présence d'une variation de courant du moteur inférieure au seuil de variation de courant permettant de constater que l'on se trouve dans la situation de correction.

8. Procédé de commande d'un véhicule automobile, le véhicule automobile (1) présentant au moins une roue (4) montée rotative et une installation de freinage (8) avec au moins un dispositif de freinage (9) et au moins un moteur électrique (13), le dispositif de freinage (9) présentant un élément de freinage relié de manière solidaire en rotation à la roue (4) et au moins un corps de freinage apte à être pressé contre l'élément de freinage, le moteur électrique (13) présentant un enroulement de moteur et un rotor monté rotatif, le rotor étant relié au corps de freinage par un dispositif de transmission (14) de telle sorte qu'une force de serrage ($F_{Spann}$) est apte à être générée par une rotation du rotor, par laquelle le corps de freinage est pressé contre l'élément de freinage, le rotor étant apte à être tourné par une sollicitation de l'enroulement du moteur par un courant électrique ($I_{Mot}$) de moteur, un niveau de la force de serrage générée ($F_{Spann}$) étant déterminée, et l'enroulement du moteur étant alimenté par le courant ($I_{Mot}$) de moteur de telle sorte que la force de serrage ($F_{Spann}$) générée corresponde à une force de serrage de consigne prédéfinie, **caractérisé en ce que** le niveau de la force de serrage ($F_{Spann}$) est déterminé par un procédé selon l'une des revendications 1 à 7.

9. Dispositif pour déterminer une force de serrage d'un dispositif de freinage d'un véhicule automobile, le véhicule automobile (1) présentant au moins une roue (4) montée rotative et un système de freinage (8) avec au moins un dispositif de freinage (9) et au moins un moteur électrique (13), le dispositif de freinage (9) présentant un élément de freinage relié de manière solidaire en rotation à la roue (4) et au moins un corps de freinage étant apte à être pressé contre l'élément de freinage, le moteur électrique (13) présentant un enroulement de moteur et un rotor monté rotatif, le rotor étant relié à l'élément de freinage par un dispositif de transmission (14) de telle sorte qu'une rotation du rotor permette de générer une force de serrage ($F_{Spann}$) par laquelle l'élément de freinage est pressé contre l'élément de freinage, et le rotor étant apte à être mis en rotation par une alimentation de l'enroulement du moteur par un courant électrique ($I_{Mot}$) de moteur, **caractérisé par** un appareil d'évaluation (26, 26A) qui est spécialement conçu pour mettre en œuvre le procédé selon l'une des revendications 1 à 7 en cas d'utilisation conforme.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- KR 101338433 B1
- EP 3156294 A1
- US 2017321773 A1